Europäisches Patentamt

European Patent Office

Office européen des brevets

(19)

(11) Publication number: **0 248 771**

**A2**

(12) # EUROPEAN PATENT APPLICATION

(21) Application number: **87830187.8**

(22) Date of filing: **20.05.87**

(51) Int. Cl.³: **C 09 J 7/02**
**C 08 L 23/02**
**//C08K5/20, C08L83/04**

(30) Priority: **20.05.86 IT 2048986**
**03.10.86 IT 2189486**

(43) Date of publication of application:
**09.12.87 Bulletin 87/50**

(84) Designated Contracting States:
**AT BE CH DE ES FR GB GR LI LU NL SE**

(71) Applicant: **COVERPLAST ITALIANA S.p.A.**
**Via Don Sturzo 20**
**I-20020 Lainate Milano(IT)**

(72) Inventor: **Camerini, Giorgio**
**Via Cosmé Tura, 40**
**Ferrara(IT)**

(74) Representative: **Aimi, Luciano et al,**
**c/o Società Italiana Brevetti S.p.A. Via Carducci 8**
**I-20123 Milano(IT)**

(54) Self-sticking sheet for thermal insulation.

(57) An intimate and dimensionally stable bond between thermally insulating foamed materials and heat exchange members, such as refrigeration equipment coils, is obtained by inserting between the heat exchange members and the gap provided for receiving the thermally insulating foamed material, a sheet or tape of olefin polymer material, adhesive-treated on a single side thereof, and comprising a lubricating agent able to migrate to the surface to assist in providing an intimate contact between the polyurethane and the support material, making mutual adaptation easier during the foaming expansion step.

EP 0 248 771 A2

Croydon Printing Company Ltd.

## "SELF-STICKING SHEET FOR THERMAL INSULATION"

This invention relates to a special adhesive tape, used to secure a tight connection between heat exchange members (metal coils) and polyurethane foam based thermally insulating materials.

Where an efficient thermal insulation has to be provided, in particular in the field of refrigeration equipments, it is often a preliminary requirement to fasten certain heat transfer instrumental metal parts, for instance coils, both mutually to each other as well as to the support structures, so that on the members and structures fastened in such a way there is easily applied the layer of thermally insulating material, preferably a sponge of closed cell foamed plastic material. This fastening operation should take place in such a way as to ensure both a sufficiently rigid mechanical bond, and an efficient thermally conductive connection between the parts requiring the same. The thermally insulating layer should be securely fastened to said members, in order to form an integral body therewith, whereby effectiveness of the required insulation is assured and the assembly of the obtained arrangement is made easier.

Thus in the case of domestic and industrial refrigeration equipments, it is required that the heat exchange coils, evaporators, and so on, are mutually connected, in order to form a unit which is then fastened in position to the refrigerator support frame, in order to receive the porous insulating material in the gap remaining between said unit and the outer portion.

Normally, this porous insulating material is obtained by using urethane pre-polymers, introduced in a liquid form together with the required catalysts inside the gap so provided. The reason why the foamable pre-polymer cannot be directly used in straight contact with the metal surfaces to be thermally insulated is that during the foaming exothermic reaction corrosion agents are formed which are able to attack the metal parts they come in contact with, thereby causing hidden damage areas that sooner or later become initiation points for failures and consequently for final breakdowns of the refrigeration equipment.

In order to correct these drawbacks, refrigeration equipment manufacturers have initially used polyvinyl chloride self-sticking tapes, marketed in suitably sized rolls. Since the coils of adhesive treated polyvinyl chloride tape tend to stick quite strongly and in an irreversible way over the back of adjacent coils, it its necessary to protect the adhesive side of the tape by means of a silicon paper sheet to be peeled off at the time of use. Obviously, this involves a considerable increase in manufacturing costs, as well as an additional operation of peeling the silicon paper at the moment of usage.

Since the additional cost of silicon paper was important and besides the disposal thereof as a step of the operating sequence created a slowdown in the

production cycle, it has been devised to provide a polyolefin supported self-sticking tape whose non-adhesive treated face is surface-activated and lined, by means of spreading, with an anti-adhesive material, which is nevertheless provided with a high chemical affinity to the foaming polyurethane, and capable of forming bonds therewith ( see Italian Patent No. 1039601). However, in this latter case as well, there are still operating problems and drawbacks, such as for instance the need for anti-adhesive lining the electronically activated surface of tape through a separate and very accurate anti-adhesive spreading operation.

Therefore, the main object of this invention is to provide an adhesive tape for the above mentioned function, which is substantially unaffected by the problems and drawbacks briefly mentioned above.

According to this invention, the above object is fulfilled by means of an adhesive tape having an olefin polymer or copolymer support, where a surface thereof is given adhesive properties by means of a composition which is capable of adhering to refrigeration coil surfaces, characterized in that to said olefin polymer or copolymer there is added, before processing into a film, an agent capable of forming stable bonds, preferably chemical in nature, with at least one of the insulating foamed polyurethane resin components, and capable of migrating to the surface of said tape. The extremely thin surface efflorescence of the additive after spontaneous of preferably heat enduced migration thereof, assists the flowing of the expanding polyure-

thane resin throughout the surface of the polyolefin resin film, which is therefore subjected to a certain amount of tension enhancing an intimate contact and increasing the physical adhesive forces between the two bodies.

The aforesaid agent is selected among the already known plastic film lubricating compounds having the property of giving a certain degree of slipperiness to said films.

Preferred although non limiting examples of said agents include the following: siliconic oils preferably reactive due to the presence of free hydroxyl radicals in the molecule thereof, and fatty acid amides. Among the fatty acid amides the preferred agents are those obtained from stearic, erucic, oleic, palmitic, behenic, arachidonic acids, as well as from coconut and hydrogenated tallow oil fatty acids, by reaction with an amide selected among the possibly substituted mono- and poly-functional amides, or with ammonia.

The employed percentages of these additives are comprised between 0,02% and 5%, preferably between 0,2% and 2% by weight referred to the weight of the film forming polymer. In the above definition, the term "added to the olefin polymer or copolymer" means that said agent should be present in the above specified percentage at the time when said polymer appears at the film extrusion die, whereby addition thereof may be performed either previously during the granulation step, or as a supplementary master batch at the extrusion step.

This invention relates therefore to a poly-olefinic support adhesive tape additioned, during the film processing step, with agents capable of migrating towards the outside, and capable of interacting with the polyurethane foam in order to form a single connecting means between the refrigeration coil and the thermally insulating polyurethane foam. Therefore, the tape comprises an additive treated film which is treated on a single face in order to receive the adhesive agent. The so prepared self-sticking tape is wound around the refrigerating coils and subsequently coated with a two-components polyurethane resin that during the foaming reaction process develops heat (approximately 70°C) assisting the additive in migrating towards the film surface wich reacts with the polyurethane in order to produce an integral body between the thermally insulating polyurethane and the refrigerating coil.

In this connection, it should be noted that the additive migration to the adhesive-treated surface does not jeopardize the bond between the adhesive and the film.

A not negligible positive side effect of the additive agent is the fact that the lubricating action thereof assists in obtaining an intimate contact and a mutual adaptation between polyurethane and film during the polyurethane expansion step, making easier to the film to bear possible stresses, whereby possible film failures or tears are avoided.

The mechanical properties of the film according to the invention are such that it exhibits sufficient flexibility and can perfectly fit around coils and metal shapes to be protected, whereby empty gaps or air bubbles are consequently totally eliminated; at the same time, the film is resilient enough to avoid that the pressure induced by the polyurethane expansion at about 70°C causes any discontinuity which would jeopardize the protection against chemical corrosion.

As a non limiting example, the properties of an adhesive tape according to the invention, matching the desired requirements are as follows:

| | |
|---|---|
| Thickness | 38 µm |
| Ultimate longitudinal tensile stress | 1,8 kg/cm |
| Longitudinal elongation | 1000% |
| Adhesive strength on steel | 220 g/cm |
| Adhesive strength on back | 65 g/cm |
| Tack | 23 cm |

In the manufacture of the adhesive tape according to this invention, the type of adhesive agent is chosen among the conventional ones, such as for instance adhesives based on natural and/or synthetic rubber in a solvent, acrylic adhesives, polyurethane adhesives, and in general thermoplastic adhesives or in situ prepared adhesives, the acrylic adhesives in a solvent being preferred. Depending upon the type of adhesive used, the presence of a retention layer may be required.

The tape support meterial according to this invention is in the form of a possibly oriented cast film of polypropylene, ethylene/propylene copolymer, polyethylene and mixtures thereof.

Examples of suitable polymer mixtures are as follows:

polypropylene 80% by weight, ethylene/propylene copolymer 20% by weight; or

polypropylene 90% by weight, linear polyethylene (LLLD-PE) 10% by weight.

The polyolefinic resin flexible support for the product according to the present invention usually has a thickness of about 30 to 100 μm. It can also be laminated with metal foils, such as aluminium or copper foils, and the bonding may be obtained either through a rolling process or by means of adhesives. The desired metal layer may also be deposited on the polyolefinic flexible support by evaporation under vacuum of the concerned metal. In such cases of a product lined with a metal layer, the layer of adhesive material is applied to the metal surface, which is then able to establish a direct contact with the metal members to be connected, whereby heat transfer is improved.

Therefore, the tape according to the present invention neither requires surface treatment or activation, nor is to be coated with an anti-adhesive agent on the non adhesive-treated surface thereof.

While this invention has been described with particular reference to a preferred embodiment thereof, it is understood that changes and/or modifications may be made by those skilled in the art, without departing from the spirit and the scope of the invention.

CLAIMS

1. An adhesive tape comprising an olefin polymer or copolymer support wherein one of its surfaces is given adhesive properties by means of a composition able to securely adhere to refrigerated surfaces, characterized in that, before manufacturing into a film, to the bulk of said olefin polymer or copolymer is added an agent capable of forming stable bonds with at least one of the polyurethane insulating resin components, during foaming thereof, and able to migrate towards the surface of said support material.

2. The adhesive tape of Claim 1, characterized in that said agent is an additive having a lubricating action.

3. The adhesive tape of Claim 2, characterized in that said lubricating additive is chosen among fatty acid amides and possibly reactive siliconic oils.

4. The adhesive tape of Claim 3, characterized in that said fatty acid amides are condensation products of a possibly substituted mono- or poly-functional amide, or of ammonia, with an acid selected among stearic, erucic, oleic, palmitic, behenic, arachidonic acids, and the coconut or hydrogenated tallow oil fatty acids.

5. The adhesive tape according to any of the preceding Claims, characterized in that said agent is present in said polymer support in a percentage from about 0,02% to 5% by weight, based on the polymer weight

6. The adhesive tape of Claim 5, characterized

in that said agent is present in e percentage from about 0,2% to 2% by weight, based on the polymer weight.

7. The adhesive tape according to any of the preceding Claims, characterized in that said tape is laminated with a metal foil whereon the adhesive layer is applied.

8. The use of the adhesive sheet or tape according to any of the preceding Claims, for permanent connection between heat exchange members and cell structured thermally insulating materials.

9. The use of the adhesive sheet or tape according to any of Claims 1 to 7, for thermally insulating domestic or industrial refrigeration systems.